# EUROPEAN PATENT SPECIFICATION

(11) **EP 1 609 756 B1**
(45) Date of publication and mention of the grant of the patent: **29.09.2010**
(21) Application number: 05002544.4
(22) Date of filing: 07.02.2005
(51) Int. Cl.: C01B 31/02, C09D 5/24, C09D 7/12, H01B 1/24

(54) **Coating composition for electric part and process for forming a coating film**
Beschichtungszusammentsetzung für elektrische Komponente und Verfahren zur Herstellung von einem Beschichtungsfilm
Composition de revetement pour composant electrique et procede de formation d'une couche de revetement

(30) Priority: 25.06.2004 JP 2004188418
(43) Date of publication of application: 28.12.2005
(73) Proprietor: FUJI XEROX CO., LTD., Minato-ku, Tokyo (JP)
(72) Inventor: Shigematsu, Taishi, c/o Fuji Xerox Co., Ltd., Ashigarakami-gun Kanagawa (JP); Kishi, Kentarou, c/o Fuji Xerox Co., Ltd., Ashigarakami-gun Kanagawa (JP); Hirakata, Masaki, c/o Fuji Xerox Co., Ltd., Ashigarakami-gun Kanagawa (JP); Anazawa, Kazunori, c/o Fuji Xerox Co., Ltd., Ashigarakami-gun Kanagawa (JP); Manabe, Chikara, c/o Fuji Xerox Co., Ltd., Ashigarakami-gun Kanagawa (JP); Watanabe, Miho, c/o Fuji Xerox Co., Ltd., Ashigarakami-gun Kanagawa (JP); Okada, Shinsuke, c/o Fuji Xerox Co., Ltd., Ashigarakami-gun Kanagawa (JP); Ooma, Shigeki, c/o Fuji Xerox Co., Ltd., Ashigarakami-gun Kanagawa (JP)
(74) Representative: Grünecker, Kinkeldey, Stockmair & Schwanhäusser Anwaltssozietät

(56) References cited:
- EP-A- 1 398 297
- EP-A- 1 538 643
- EP-A- 1 544 607
- WO-A-01/07694
- DATABASE WPI Section EI, Week 200532 Derwent Publications Ltd., London, GB; Class U11, AN 2005-142796 XP002344693 -& WO 2005/010995 A1 (FUJI XEROX CO LTD) 3 February 2005 (2005-02-03)
- ZHANG L ET AL: "SIDEWALL FUNCTIONALIZATION OF SINGLE-WALLED CARBON NANOTUBES WITH HYDROXYL GROUP-TERMINATED MOIETIES" CHEMISTRY OF MATERIALS, AMERICAN CHEMICAL SOCIETY, WASHINGTON, US, vol. 16, no. 11, 22 April 2004 (2004-04-22), pages 2055-2061, XP002325306 ISSN: 0897-4756

## Description

### 1. Field of the invention

The present invention relates to such a coating composition for an electric part that can be utilized for printing and coating upon producing an electric part utilizing carbon nanotubes, and a method for forming a coating film using the same.

### 2. Description of the Related Art

A carbon nanotube found on 1991 is a new material that is constituted only by carbon atoms as a constitutional element. The shape thereof is a one-dimensional cylinder of a wound graphene sheet constituted by 6-membered rings of carbon atoms. A carbon nanotube having a structure constituted by only one graphene sheet is referred to as a single wall carbon nanotube (SWNT) and that having a structure constituted by plural layers of graphene sheets is referred to as a multi-wall carbon nanotube (MWNT).

A SWNT has a diameter of about 1 nm and a MWNT has a diameter of about several tens nanometers, which are significantly thinner than the conventional carbon fiber. The characteristics of a carbon nanotube are largely different from those of other materials constituted only by carbon atoms, such as graphite, amorphous carbon and diamond. In particular, a carbon nanotube has a remarkable characteristic feature in electric property, i.e., it changes from a semiconductor to a conductor by slightly changing the arrangement of atoms (chirality). Furthermore, a carbon nanotube has a significantly high electroconductivity and can flow such a large electric current of 100 MA/cm² in terms of electric current density.

There have been earnest attempts to apply the peculiar characteristics to electric parts, and for example, a field effect transistor using carbon nanotubes as a material has been practically produced, and the operations thereof have been confirmed, as described in Applied Physics Letter, vol. 73, No. 17, p. 2447 (1998) andAppliedPhysicsLetter, vol. 75, No. 16, p. 2494 (1999).

However, the process disclosed in Applied Physics Letter, vol. 73, No. 17, p. 2447 (1998) and Applied Physics Letter, vol. 75, No. 16, p. 2494 (1999), is not suitable for mass production due to such a problem that carbon nanotubes are spread on electrodes patterned on a silicon substrate, and a transistor is produced by utilizing only one carbon nanotube that accidentally crosslinks the electrodes. There is another problem that the transistor cannot be produced on an arbitrary location on the surface of the substrate. These problems are ascribed to the fact that only one carbon nanotube, which is minute and difficult to handle, is manipulated.

Therefore, as a measure for avoiding the problems, it is considered that plural carbon nanotubes are formed into a film for facilitate manipulation thereof. This can be attained by dispersing carbon nanotubes in an insulating binder, such as a polymer, and forming the mixture into a film, as disclosed in JP-A-2002-110402.

In this method, however, the individual carbon nanotubes are covered with the binder as an insulating material, whereby it is difficult to utilize sufficiently the excellent electric characteristics inherent to carbon nanotubes, and the method is not suitable for electric parts. In order to utilize the excellent electric characteristics inherent to carbon nanotubes sufficiently, there are such measures that the amount of the binder is reduced, and the carbon nanotubes are pressed to form a film with no binder used. In the film obtained by these measures, however, the carbon nanotubes are simply in contact with each other, and the state of contacting the carbon nanotubes in the binder is changed by folding to fluctuate the electric characteristics, whereby no sufficient performance can be stably obtained. Furthermore, the film is difficult to handle due to the small mechanical strength thereof.

It is understood from the above that in order to exert stably the characteristics inherent to carbon nanotubes, such as electroconductivity and mechanical strength, it is desirable that not only plural carbon nanotubes are in contact with each other with a binder component in an amount as small as possible, but also the carbon nanotubes are crosslinked to each other.

An example of an aggregated body of crosslinked carbon nanotubes is disclosed in JP-A-2002-503204. In the process disclosed in JP-A-2002-503204, for example, functional groups are introduced into carbon nanotubes, and the functionalized carbon nanotubes are filtered and aggregated as a mat, followed by molding. JP-A-2002-503204 states that, oxidized carbon nanotubes, in particular, have cohesiveness by themselves, and a hard and porous structure can be obtained without an adhesive.

It is unlikely to cause cohesiveness owing to the functional groups in the oxidized carbon nanotubes. It can be expected accordingly that it can be ascribed that entanglement of the carbon nanotubes dispersed in an aqueous solution is facilitated by improvement in hydrophilicity thereof due to oxidation, whereby aggregation thereof is facilitated. However, the aggregated body cannot have a sufficient strength since it is not formed through chemical bonds, and there is suggested that the aggregated body is strengthened by making it in contact with a crosslinking agent, such as a diol and a diamine, capable of undergoing a crosslinking reaction with the functional groups.

It is being expected that carbon nanotubes excellent in electric characteristics are applied to an integrated electronic device, which necessitates minute pattern formation. However, there is a limitation in miniaturization by the process disclosed in JP-A-2002-503204, in which the filtered aggregated body is mechanically molded. A certain level of mechanical strength can be obtained by a bulky material, such as the aggregated body, but it is necessary that the carbon nanotube aggregated body is formed into a thin film in cases where the carbon nanotubes are minutely processed by patterning, such as etching, patterned by printing technique, and applied to a wide area. Furthermore, it is necessary that the thin film itself has such a toughness that the thin film can maintain the shape thereof and is prevented from breakage of electric characteristics against the patterning process and a certain level of deformation and impact.

Moreover, in order to apply various purposes, such an additive is necessarily avoided from mixing that deteriorates the electric characteristics of the carbon nanotubes or the capability of the device even though the additive improves the controllability in thickness of the film or improves the mechanical strength of the film.

JP-A-2002-503204discloses that slurry is prepared by dispersing carbon nanotubes in an aqueous or organic solvent, and the slurry is filtered to form an aggregated body, to which a crosslinking agent is then added. According to verification made by the inventors, because most kinds of slurry obtained by dispersing carbon nanotubes in a solvent have no sufficient viscosity, it is difficult that the slurry is dropped on a substrate to spread over the substrate, and as a result, it is difficult that carbon nanotubes are dispersed in a wide area with an aggregated state maintained. Upon applying the spin coating method, in particular, substantially no carbon nanotube remains on the substrate. It is expected accordingly that the process disclosed in JP-A-2002-503204 employs such a method that carbon nanotubes are aggregated at a certain site by filtration to form an aggregated body.

As the crosslinking agent for crosslinking the functionalized carbon nanotubes, a polyol and a diol are exemplified. According to verification made by the inventors, a crosslinked carbon nanotube film using ethylene glycol, which is a diol, is extremely brittle and is easilybroken by lightly touching, and such a process as etching cannot be applied thereto. Upon attempting to produce a crosslinked carbon nanotube film by using ethylenediamine as a crosslinking agent, the carbon nanotubes are not crosslinked.

It is expected that JP-A-2002-503204 exemplifies a diol and a diamine as an example of a crosslinking agent easily undergoing a crosslinking reaction, but fails to find out a problem of a weak bond strength obtained by using a diol and a diamine as a crosslinking agent. The weakness in bond strength conspicuously appears upon forming carbon nanotubes into a film, which can be applied to various purposes, and thus it has been found that such a firm crosslinked state that can be applied to an electric device cannot be obtained by the process disclosed in JP-A-2002-503204.

EP 1 544 607 describes an electrode which comprises a carbon nanotube, a catalyst causing a specific reaction, and an insulator in which the carbon nanotube and the catalyst are embedded.

EP 1 538 643 discloses an electrical member employing a carbon nanotube structure as an electrical contact.

EP 1 630 128 describes a carbon nanotube device useful for electrical components and electrical elements and a method of manufacturing the same.

The present invention has been mode in view of the above circumstances and provides such a coating composition for an electric part that can form a crosslinked carbon nanotube film capable of being applied practically to an electric part through coating or printing technique, and to provide a method for forming a coating film by using the coating composition for an electric part.

According to a first aspect of the invention, a coating composition for an electric part, includes: carbon nanotubes each having a functional group; and a crosslinking agent crosslinking the functional groups through a crosslinking reaction associated with heating and comprising butanetriol or a mixture of glycerin and butanetriol.

According to a second aspect of the invention, a method for forming a coating film, includes: coating a coating composition for an electric part on a target material, the coating composition including carbon nanotubes and a crosslinking agent; and heating the coating composition to form a crosslinked film of the carbon nanotubes on the target material, in which, the carbon nanotubes each has a functional group, the crosslinking agent crosslinks the functional groups through a crosslinking reaction associated with heating, the crosslinking agent comprises butanetriol or a mixture of glycerin and butanetriol.

The object of the present invention is solved on the basis of claims 1 to 6.
Figs. 1-i to 1-v are enlarged cross sectional views of a substrate in the process for producing the field effect transistor in Reference Example 2, in which the process steps proceed from Fig. 1-i to 2-ix, and Figs. 1-i to 1-v show the first half of the process.
Figs. 2-vi to 2-ix are enlarged cross sectional views of a substrate in the process for producing the field effect transistor in Reference Example 2, in which the process steps proceed from Fig. 1-i to 2-ix, and Figs. 2-vi to 2-ix show the last half of the process.
Fig. 3 is an enlarged plane view of the field effect transistor produced in Reference Example 2.
Fig. 4 is a cross sectional view on line A-A in Fig. 3.
Fig. 5 is a graph showing the results of the measurement of the current-voltage characteristics with direct current between the source electrode and the drain electrode with respect to the voltage (gate voltage) of the gate electrode for the field effect transistor produced in Example 2.

While the invention has been described in detail and with reference to specific embodiments thereof, it will be apparent to one skilled in the art that various changes and modifications can be made without departing from the scope thereof.

The coating composition for an electric part of the invention contains carbon nanotubes each having a functional group, and a crosslinking agent crosslinking the functional groups through a crosslinking reaction associated with heating, and the crosslinking agent is butanetriol or a mixture of glycerin and butanetriol.

Butanetriol or a mixture of glycerin and butanetriol functions as a crosslinking agent, for example, for -OH, -COOH, -COOR (wherein R represents a substituted or unsubstituted hydrocarbon group), -COX (wherein X represents a halogen atom), -NH₂ and -NCO. Glycerin has a boiling point of 290°C and becomes evaporable from around 160°C, at which a crosslinking reaction occurs. Butanetriol has a boiling point of 312°C and becomes evaporable from around 170°C, at which a crosslinking reaction occurs. Therefore, the crosslinking agent remaining after the crosslinking reaction can be evaporated by further heating to remove from the film.

Glycerin is a liquid having a viscosity of 1.4 Pa·s (14 P (poise)) at ordinary temperature, which is a suitable viscosity for dispersing carbon nanotubes in a solid state. Butanetriol is a liquid having a boiling point of 312°C and a viscosity equivalent to that of glycerin, and becomes a liquid having a suitable viscosity at a temperature lower than the reaction temperature of the crosslinking reaction.

The crosslinked body formed is extremely tough, and it is not released under a scratch test (JIS K5600-5-5, scratch test (loaded needle test), load: 50 g), suffers no release or breakage under a bending test (JISK5600-5-1, flexibility (cylindrical mandrel method)), and suffers no deterioration in electroconductivity in a conductive test after the bending test. These test results are not constitutional requirements of the invention but are verification results obtained by the inventors.

In the case where ethylene glycol is used as a crosslinking agent, only a weak crosslinked film is obtained, and the film is broken and released by an external force, such as scratching and bending, as having been described. In this case, dilution with a viscosity adjusting agent brings about further deterioration in strength of the crosslinked film, and thus a film suitable for an electric part cannot be produced even though the viscosity can be adjusted to a value suitable for a coating composition.

Apolyol having 4 or more hydroxyl groups is generally in a solid state in a temperature range for a crosslinking reaction, and cannot be applied to a coating composition.

In the invention, on the other hand, butanetriol or a mixture of glycerin and butanetriol is used as a crosslinking agent to produce such a coating composition for an electric part (hereinafter, sometimes simply referred to as a coating composition) that is excellent in both coating property and film property suitable for an electric part.

In the coating composition of the invention, a liquid may be added as a concentration adjusting agent for carbon nanotubes that has no function as a crosslinking agent, has a viscosity equivalent to the coating composition, and a boiling point lower than the crosslinking temperature. Even in case where butanetriol or a mixture of glycerin and butanetriol is added in an amount larger than that required for the crosslinking reaction, the surplus amount thereof is not involved in the crosslinking reaction and is evaporated to exert no adverse influence. Therefore, in order to adjust the concentration of the carbon nanotubes, it is preferred that the addition amount of butanetriol or a mixture of glycerin and butanetriol as a concentration adjusting agent is increased (particularly preferably, the coating composition contains, as a liquid component, only the crosslinking agent) in view of simplicity.

The coating composition of the invention may contain a viscosity adjusting agent that is evaporated by heating. A solvent that undergoes no crosslinking reaction among the carbon nanotubes, as different from the crosslinking agent, may be used as the viscosity adjusting agent, and in particular, a monohydric alcohol is preferably used. A monohydric alcohol is well miscible with butanetriol or a mixture of glycerin and butanetriol, which is a polyhydric alcohol, as the crosslinkingagent (i.e., has a high solubility there with), and undergoes no crosslinking reaction. Those having a boiling point equal to or lower than the crosslinking reaction temperature do not impair the crosslinking reaction. As a result, even in the case where the viscosity adjusting agent is added for dilution to adjust the viscosity of the coating composition depending on the printing process or the like, butanetriol or a mixture of glycerin and butanetriol having three crosslinking sites can provide a crosslinked film excellent in strength.

Butanetriol or a mixture of glycerin and butanetriol used as the crosslinking agent has a suitable viscosity, and thus the viscosity of the coating composition can be easily adjusted by adding a viscosity adjusting agent. It is preferred in this case that a viscosity adjusting agent having a viscosity lower than that of the crosslinking agent is mixed. The viscosity adjusting agent is particularly preferably methanol and/or ethanol. Methanol has a viscosity of 1.08 x 10⁻³ Pa·s, and ethanol has a viscosity of 5.43 x 10⁻⁴ Pa·s, which are lower than that of the crosslinking agent used in the invention.

In the case where the functional group of the carbon nanotubes is a -COOR group (wherein R represents a substituted or unsubstituted hydrocarbon group) or a -COOH group, the viscosity adjusting agent is preferably methanol and/or ethanol. There is such a possibility in this case that methanol and ethanol form a chemical bond to the carboxyl group modifying the carbon nanotubes, but what is formed through the reaction is a -COOCH₃ group (for methanol) or a -COOC₂H₅ group (for ethanol), and whereby they do not impair the crosslinking reaction. In case where the linear chain of the hydrocarbon part is prolonged, the crosslinked part may be a factor of deteriorating the electric characteristics, and therefore, methanol or ethanol is preferably used.

In the case where the viscosity is increased, the content of the carbon nanotubes may be increased to increase the viscosity of the coating composition. A crosslinked film having high quality can similarly produced in this case.

In the coating composition for an electric part of the invention, the crosslinking reaction temperature and the boiling point of the crosslinking agent are both 200°C or less, and thus, a crosslinked carbon nanotube film can be formed not only on an ordinary substrate, such as silicon, glass and quartz, but also on a substrate that is relatively weak against heat, such as plastics, polymers and paper. Furthermore, the coating composition coated to an arbitrarily shape by applying various kinds of coating techniques, such as various printing techniques, can be cured to form a tough crosslinked carbon nanotube film resistant to bending, whereby various kinds of electric parts can be produced.

Upon coating the coating composition of the invention, such known printing techniques may be used as the dip method, the spray method, the cast method, the spin coating method, the type printing method, the offset printing method, the gravure printing method, the screen printing method and the inkjet printing method.

The coating composition can form a firm film even in the case where the viscosity thereof is lowered, and thus the coating composition can be applied to various printing techniques after adjusting the viscosity of the coating composition to a value suitable for the printing techniques by using the viscosity adjusting agent. It is preferred that the viscosity is adjusted, for example, to a range of from 1.0 to 2.0 Pa·s (from 10 to 20 P (poise)) for the type printing method, a range of from 10.0 to 20.0 Pa·s (from 100 to 200 P (poise)) for the offset printing method, and from 0.05 to 0.20 Pa·s (from 0.5 to 2.0 P (poise)) for the gravure printing method.

After coating the coating composition of the invention on a target material by an arbitrary coating method, such as the printing techniques, the coating composition thus coated is heated to form a crosslinked film of crosslinked carbon nanotubes (coating film) on the surface of the target material. Even in the case where the viscosity adjusting agent and the crosslinking agent are used in excessive amounts, the surplus amounts of the crosslinking agent and the viscosity adjusting agent are evaporated by heating to a high temperature (for example, about 200°C), and thus the crosslinked film of carbon nanotube thus obtained contains substantially no impurity to form a coating film excellent in electric characteristics.

The electric characteristics obtained by the crosslinked body of carbon nanotubes include not only electroconductivity but also semiconductor nature by providing plural terminals thereon, as a result of studies by the inventors, and therefore, the carbon nanotube crosslinked film can also be used as a functional film corresponding to a transporting layer of a semiconductor device.

Examples of the functional group introduced into carbon nanotubes in the coating composition of the invention include -OH, -COOH, -COOR (wherein R represents a substituted or unsubstituted hydrocarbon group), -COX (wherein X represents a halogen atom) , -NH₂ and -NCO, and at least one selected from the group consisting of these groups is preferably used. More preferably, -COOR (wherein R represents a substituted or unsubstituted hydrocarbon group) is used. A carboxyl group is relatively easily introduced into carbon nanotubes, and since the resulting substance (i.e., carbon nanotube carboxylic acid) has high reactivity, the carboxyl group can be relatively easily converted to -COOR (wherein R represents a substituted or unsubstituted hydrocarbon group) through esterification. The functional group -COOR (wherein R represents a substituted or unsubstituted hydrocarbon group) easily undergoes a crosslinking reaction and is suitable for forming a coating film.

According to the invention, upon forming a coating film as a crosslinked film of carbon nanotubes, such a coating composition for an electric part can be provided that is excellent in both coating property and film property suitable for an electric part.

The crosslinked film of carbon nanotubes (coating film) formed by using the coating composition for an electric part of the invention contains no crosslinking agent or viscosity adjusting agent remaining, and thus the crosslinked film can be used for various electric purposes. The coating composition of the invention can be applied not only to a substrate frequently used in the semiconductor process, such as silicon, glass and quartz, but also to a substrate that is excellent in cost and flexibility, such as plastics, polymers and paper, whereby various electric parts can be produced.

The invention will be described in detail below.

### [Coating Composition for Electric part]

The coating composition for an electric part of the invention contains, as essential components, carbon nanotubes each having a functional group, and a crosslinking agent capable of undergoing a crosslinking reaction with the functional groups, and also contains, depending on necessity, a concentration adjusting agent, a viscosity adjusting agent and the like. The crosslinking agent is butanetriol or a mixture of glycerin and butanetriol, and in a preferred embodiment, the crosslinking agent is used in such an amount that is sufficient for providing fluidity of the coating composition to provide a coating composition in a liquid form.

### (Carbon Nanotube)

In general, a carbon nanotube is constituted by a graphene sheet having hexagonal mesh of carbon forming a tube in parallel to the axis of the tube. A carbon nanotube is further classified into a single wall carbon nanotube having a structure containing only one graphene sheet, and a multi-wall carbon nanotube containing plural layers of graphene sheets. The structure of the carbon nanotube obtained depends, to certain extent, on the synthesis method and conditions.

The carbon nanotube as the major constitutional component in the invention may be either the single wall carbon nanotube or the multi-wall carbon nanotube having two or more layers of graphene sheets. The kind of the carbon nanotube or a mixture thereof to be used may be appropriately determined under consideration of the purpose of the coating film to be formed and the cost thereof.

Variants of a single wall carbon nanotube may also be used as the carbon nanotube in the invention. Examples of the variants include those having such a shape that is not strictly a tube form, such as a carbon nanohorn (with a horn shape having a diameter continuously expanding from one end to the other end), a carbon nanocoil (with a coil form having a spiral form in total), a carbon nanobead (with such a shape that has a tube at the center thereof, and a spherical bead formed of amorphous carbon or the like, through which the tube penetrates), a cup-stack carbon nanotube, and a carbon nanotube having a carbon nanohorn or amorphous carbon covering the outer periphery of the carbon nanotube.

A carbon nanotube inclusive of a substance may also be used as the carbon nanotube in the invention, such as a metal-encapsulated carbon nanotube, and a carbon nanotube peapod having a fullerene or a metallofullerene included in the carbon nanotube.

As having been described, any kind of carbon nanotubes may be used in the invention from the standpoint of reactivity thereof, such as ordinary carbon nanotubes, variants thereof and carbon nanotubes having been subjected to various modifications. Therefore, all the materials are included in the concept of the term "carbon nanotube" referred herein.

The carbon nanotube can be synthesized by the known method, such as the arc discharge method, the arc ablation method and the CVDmethod, and the synthesis method thereof is not limited in the invention. Among these methods, the arc discharge method in a magnetic field is preferred since carbon nanotube having high purity can be synthesized.

The carbon nanotube used preferably has a diameter of from 0.3 to 100 nm. In the case where the diameter of the carbon nanotube exceeds the range, synthesis thereof becomes difficult, and thus it is not preferred from the standpoint of cost. The diameter of the carbon nanotube is more preferably 30 nm or less.

In general, the lower limit of the diameter of the carbon nanotube is about 0.3 nm as determined by the structure thereof. There are some cases where the yield upon production of the carbon nanotube is lowered when the diameter thereof is too small, and thus the diameter is more preferably 1 nm or more, and further preferably 10 nm or more.

The carbon nanotube used preferably has a length of from 0.1 to 100 µm. In the case where the length of the carbon nanotube exceeds the range, synthesis thereof becomes difficult or requires a special process, and thus it is not preferred from the standpoint of cost. In the case where the length is lower than the range, it is also not preferred since the number of crosslinking sites per one carbon nanotube is decreased. The length of the carbon nanotube is more preferably 10 µm or less and is more preferably 1 µm or more.

The content of the carbon nanotube in the coating composition cannot be determined unconditionally but depends on the length and the thickness of the carbon nanotube, the structure thereof, i.e., the single wall or the multi-wall, the kind and the amount of the functional groups, the kind and the amount of the crosslinking agent, and the presence or absence, the kind and the amount of the viscosity adjusting agent. The content of the carbon nanotube may be such a degree that can provide a coating film having good performance after curing. The coating composition contains the crosslinking agent in such an amount or more that requires for the crosslinking reaction of the carbon nanotube. The coating composition preferably has a viscosity of from 0.001 to 100.0 Pa·s (from 0.01 to 1, 000 P (poise)) to provide suitable property as a coating composition. The viscosity may be appropriately adjusted depending on the purposes.

The specific proportion of the carbon nanotube in the coating composition cannot be determined unconditionally, as having been described, and may be selected from a range of about from 0.01 to 10 g/L, preferably a range of about from 0.1 to 5 g/L, and more preferably a range of about from 0.5 to 1.5 g/L, without the mass of the functional groups, based on the total amount of the coating composition.

In the case where the purity of the carbon nanotube to be used is not high, it is preferred that the purity thereof is increased by purification before preparing the coating composition. The purity is preferably as high as possible in the invention, and specifically the purity is preferably 90% or more, and more preferably 95% or more. The purification method of the carbon nanotube is not particularly limited, and the known methods may be used.

### (Functional Group)

The functional group of the carbon nanotube in the invention is preferably at least one group selected from the group consisting of -OH, -COOH, -COOR (wherein R represents a substituted or unsubstituted hydrocarbon group), -COX (wherein X represents a halogen atom), -NH₂ and -NCO, capable of undergoing a crosslinking reaction with glycerin or butanetriol, and in this case, such a crosslinking agent is selected that is capable of undergoing a crosslinking reaction with the functional group thus selected.

The functional group -COOR (wherein R represents a substituted or unsubstituted hydrocarbon group) is particularly preferred because a carboxyl group can be relatively easily introduced into the carbon nanotube, and the -COOR group can be easily introduced as the functional group through esterification of the resulting substance (i.e., carbon nanotube carboxylic acid). Furthermore, the -COOR group is good in reactivity with the crosslinking agent.

The substituent R in the functional group -COOR is a substituted or unsubstituted hydrocarbon group and is not particularly limited. The substituent R preferably is an alkyl group having from 1 to 10 carbon atoms, more preferably an alkyl group having from 1 to 5 carbon atoms, and particularly preferably a methyl group or an ethyl group, from the standpoint of reactivity, solubility, viscosity, and usability as a solvent for the coating composition.

The amount of the functional groups introduced cannot be determined unconditionally but depends on the length and the thickness of the carbon nanotube, the structure thereof, i.e., the single wall or the multi-wall, and the kind of the functional groups, and it is preferably such an amount that two or more functional groups are attached to one carbon nanotube from the standpoint of the strength of the resulting crosslinked body, i.e., the strength of the resulting coating film.

The method of introducing the functional group to the carbon nanotube will be described in the section "Forming Method of Coating film" later.

### (Viscosity Adjusting Agent)

The coating composition of the invention may contain a viscosity adjusting agent. The viscosity adjusting agent is added in case where the viscosity of the coating composition is too high only with the crosslinking agent to fail to provide sufficient coating applicability. The viscosity adjusting agent that can be used is not particularly limited as far as it is a solvent having a boiling point of 200°C or less and no crosslinking function, and can be appropriately selected depending on the kind of the crosslinking agent used. The viscosity adjusting agent is preferably at least one of methanol and ethanol because of the reasons having been described.

Glycerin or butanetriol has such an appropriate viscosity by itself that can provide both softness capable of forming a coating film and hardness capable of maintaining the shape of the coating film. In the case where a viscosity adjusting agent is added to lower the viscosity excessively, the liquid component flows out from the coating film to fail to maintain the shape of the coating film. Furthermore, the crosslinking reaction is carried out at the crosslinking reaction temperature, at which the crosslinking agent is reacted and also evaporated, and therefore, in the case where the proportion of the crosslinking agent is lowered due to the addition of the viscosity adjusting agent, the crosslinking agent cannot remain in a sufficient amount in the carbon nanotube film before crosslinking but is evaporated before crosslinking sufficiently. Accordingly, the proportion of the crosslinking agent in the liquid components of the coating composition is preferably 60% by weight (mass) or more, and more preferably 70% by weight or more.

In cases where the viscosity of the coating composition can be adjusted by the addition amount of the carbon nanotube, or in cases where the density of carbon nanotubes in the resulting carbon nanotube crosslinked film is not necessarily adjusted or can be adjusted by the coating conditions, the coating composition of the invention can be constituted substantially only by butanetriol or a mixture of glycerin and butanetriol as a liquid component without any other liquid component added, whereby a coating film having higher uniformity can be obtained.

### (Other Components)

The coating composition of the invention may contain other components depending on necessity. Various kinds of additives that are appropriately added to the known coating compositions may be added in such a small amount that does not adversely affect the nature of the coating composition of the invention and does not deteriorate the electric characteristics of the crosslinked film to be produced to a level against the target purpose.

Specific examples of the additive include an antiseptic agent, an antifungal agent, a surfactant, an antioxidant and an ultraviolet ray absorbent, and the invention is not limited thereto.

### (Formulation)

The coating composition of the invention is in a liquid state for attaining coating applicability. In the case where the functional groups and the crosslinking agent have been mixed with each other, there may be such a case that evaporation of the crosslinking agent or the crosslinking reaction proceeds to cure the coating composition, which cannot be used for coating, depending on the combination of the functional groups and the crosslinking agent. In such a case, it is preferred that the coating composition is divided to two liquid components (one of which may be a solid material, such as powder), and the components are mixed with each other to form the coating composition immediately before coating. In the invention, such a formulation that has been divided to two components before preparing the coating composition is referred to as a two-liquid type formulation (which includes a two-component type formulation, one component of which is a solid material, such as powder).

The coating composition of the invention thus obtained has high dispersion stability of the carbon nanotubes and has a suitable viscosity, so as to provide high coating applicability. In the case where the content of the carbon nanotubes is large, in particular, high dispersion stability is obtained in the coating composition of the invention owing to the combination of the carbon nanotubes each having a hydrophilic functional group and butanetriol or a mixture of glycerin and butanetriol as a crosslinking agent, although ordinary carbon nanotubes exhibit significantly low dispersion stability due to the solvent insolubility thereof. Furthermore, the surplus amounts of the crosslinking agent and the viscosity adjusting agent can be evaporated by heating, whereby a crosslinked carbon nanotube film having little amount of impurities.

The coating film of the invention can be produced by coating the coating composition of the invention having been described on a suitable target material and then heated for curing. The methods of coating and curing (heating) will be described in detail in the section "Process for forming Coating film" later.

The carbon nanotube crosslinked film (coating film) formed by using the coating composition of the invention has such a state that the carbon nanotubes form a network. More specifically, the crosslinked film is cured to for a network, in which the carbon nanotubes are linked to each other through crosslinking parts, whereby the characteristics inherent to the carbon nanotubes, such as high conduction characteristics for an electron and a positive hole, can be exerted without inhibition due to impurities. In other words, the coating film obtained by using the coating composition of the invention contains carbon nanotubes linked to each other but contains no other components, such as a binder, and thus is constituted substantially only with carbon nanotubes, whereby the electric characteristics of the carbon nanotubes can be sufficiently utilized, and a film having extremely high toughness and high versatility for an electric part can be obtained.

The thickness of the coating film may be widely selected, i.e., from extremely thin to relatively thick, depending on purposes. For example, an extremely thin coating film can be obtained by decreasing the content of carbon nanotubes in the coating composition (simply diluting the coating composition to lower the viscosity), and coating the coating composition to a thin film. A thick coating film can be obtained by increasing the content of carbon nanotube in the coating composition. A thicker coating film can also be obtained by repeating the coating operation. An extremely thin coating film may have a dry thickness of about 10 nm or more, and the thickness of the coating film can be increased without limitation by repeating the coating operation. The dry thickness that can be obtained by the single coating operation is about 5 µm.

In the coating film formed by using the coating composition of the invention, the sites where the carbon nanotubes are crosslinked to each other, i.e., the crosslinking sites obtained by the crosslinking reaction between the functional groups of the carbon nanotubes and the crosslinking agent, have such a crosslinking structure that the residual groups of functional groups remaining after the crosslinking reaction are linked through a linking group, which is the residual group of the crosslinking agent remaining after the crosslinking reaction. Owing to the use of butanetriol or a mixture of glycerin and butanetriol as the crosslinking agent, two or three functional groups can be crosslinked to each other through one molecule of the crosslinking agent, whereby such a film can be obtained that is tough, ensures electric conduction, and is suitable for an electric part.

A method for preparing the coating composition for an electric part of the invention will be described.

The coating composition for an electric part of the invention can be prepared through a mixing step of mixing the respective components.

Before preparing the coating composition, an adding of introducing functional groups to carbon nanotubes may be carried out. In the case where carbon nanotubes each having a functional group are used as a starting material, only the operation of the mixing step is carried out, and in the case where ordinary carbon nanotubes are used as a starting material, the adding step is carried out prior to the mixing step. The one-liquid type or two-liquid type coating composition of the invention is prepared through the mixing step.

### (Adding Step)

In the invention, the adding step is to introduce a desired functional group to carbon nanotubes. The method for introducing the functional group cannot be determined unconditionally since it varies depending on the kind of the functional group. While the target functional group may be directly added, it is possible for obtaining the target functional group that such a functional group that can be easily introduced is once introduced, and then the functional group or a part thereof is substituted, or another functional group is further added to the functional group having been introduced.

It is also possible that a mechanochemical force is applied to the carbon nanotubes to broken or modify a part of the graphene sheet on the surface of the carbon nanotubes, and various kinds of a functional group is introduced thereto.

The operation of the adding step is not particularly limited, and any known method may be used. Examples of various methods that can be used are disclosed in JP-A-2002-503204, which can also be used in the invention depending on purposes.

Amethod for introducing -COOR (wherein R represents a substituted or unsubstituted hydrocarbon group), which is particularly preferred, will be described. When introducing -COOR (wherein R represents a substituted or unsubstituted hydrocarbon group) into the carbon nanotubes, (i) a carboxyl group is introduced to the carbon nanotubes, and then (ii) the hydroxyl group is esterified.

### (i) Addition of Carboxyl Group

A carboxyl group can be introduced to carbon nanotubes by refluxing with an acid having oxidizing property. The operation is relatively simple and is preferred since a carboxyl group having high reactivity can be introduced. The operation will be briefly described.

Examples of the acid having oxidizing property include concentrated nitric acid, a hydrogen peroxide solution, a mixed solution of sulfuric acid and nitric acid, and aqua regia. In the case where concentrated nitric acid is used, in particular, the concentration thereof is preferably 5% by weight or more, and more preferably 60% by weight or more.

The refluxing may be carried out by the ordinary method, and the temperature therefor is preferably around the boiling point of the acid used. For example, a temperature of from 120 to 130°C is preferred for concentrated nitric acid. The period of time for the refluxing is preferably from 30 minutes to 20 hours, and more preferably from 1 to 8 hours.

Carbon nanotubes each having a carboxyl group added (i.e., carbon nanotubes carboxylic acid) are formed in the reaction solution after refluxing, and after cooling the solution to room temperature, the target carbon nanotubes carboxylic acid can be obtained through separation operation and washing, depending on necessity.

### (ii) Esterification

An alcohol is added to the resulting carbon nanotubes carboxylic acid to effect dehydration and esterification, whereby the target functional group -COOR (wherein R represents a substituted or unsubstituted hydrocarbon group) can be introduced.

The alcohol used for the esterification is determined by the R in the functional group. That is, methanol is used for the case where R is CH₃, and ethanol is used for the case where R is C₂H₅.

A catalyst is generally used for esterification, and in the invention, a known catalyst, such as sulfuric acid, hydrochloric acid and toluenesulfonic acid, may be used. Sulfuric acid is preferably used as the catalyst in the invention since it causes no side reaction.

The esterification can be carried out in such a manner that an alcohol and a catalyst are added to the carbon nanotubes carboxylic acid, and the mixture is refluxed at an appropriate temperature for an appropriate period of time. The temperature conditions and the time conditions herein cannot be determined unconditionally since they vary depending on the kind of the catalyst, the kind of the alcohol and the like, and the reflux temperature is preferably around the boiling point of the alcohol used. For example, in the case where methanol is used, the reflux temperature is preferably from 60 to 70°C. The period of time for refluxing is preferably from 1 to 20 hours, and more preferably from 4 to 6 hours.

After separating the reaction product from the reaction mixture after the esterification, followed by washing depending on necessity, to obtain carbon nanotube each having a functional group -COOR (wherein R represents a substituted or unsubstituted hydrocarbon group) added thereto.

### (Mixing Step)

In the mixing step of the invention, the carbon nanotubes each having a functional group are mixed with the crosslinking agent capable of causing a crosslinking reaction with the functional to prepare the coating composition that can be used. The coating composition that can be used referred herein means either the one-liquid type coating composition or the coating composition obtained by mixing the two-liquid type (separation type) coating composition immediately before coating.

Therefore, the two-liquid type coating composition becomes the coating composition for an electric part that can be practically used through the operation of the mixing step, and thus the coating composition for an electric part as defined in the invention also includes such an embodiment that two liquids are independently provided, and they are handled as a combination thereof. In this embodiment, the coating composition may be separated into two formulations, i.e., "carbon nanotubes each having a functional group" and "crosslinking agent", under consideration of the reactivity therebetween and the nature (liquid state or solid state) thereof. In the case where another component is added to the coating composition, the additional component may be added to either formulation.

In the mixing step, the other components described in the section "Coating Composition" are also mixed in addition to the carbon nanotubes each having a functional group and the crosslinking agent. It is preferred that the addition amount of the solvent or the viscosity adjusting agent is adjusted under consideration of the coating applicability to prepare the one-liquid type coating composition or the coating composition immediately before coating.

Upon mixing, the components may be simply stirred with a spatula or stirred by a stirrer having stirring blades, a magnetic stirrer or a stirring pump, and the components may be strongly dispersed by using an ultrasonic dispersing machine or a homogenizer in order that the carbon nanotubes are more uniformly dispersed to improve the storage stability or to form a network structure by crosslinking the carbon nanotubes over the entire coating film. In the case where a stirring machine imparting a strong shearing force for stirring, such as a homogenizer, is used, however, the stirring operation may be carried out for a short period of time for preventing the carbon nanotubes from being broken or damaged.

### (Process for forming Coating film)

The process for forming a coating film of the invention contains steps of: coating the coating composition for an electric part of the invention on a target material, and heating the coating composition thus coated to form a crosslinked film of carbon nanotubes on the surface of the target material. Specifically, the process contains a step of coating the coating composition of the invention on a target material (coating step), and a step of heating the coating composition thus coated to a crosslinking reaction temperature for undergoing the crosslinking reaction (curing step). In the curing step, butanetriol or a mixture of glycerin and butanetriol begins to evaporate around the crosslinking temperature while the boiling points thereof are higher than the crosslinking temperature (about from 150 to 200°C as described later) by about 100°C or more. Butanetriol or a mixture of glycerin and butanetriol are gradually evaporated upon allowing to stand around the crosslinking temperature under the atmospheric pressure, and finally they completely disappear. Therefore, glycerin and butanetriol have such a nature that attains both the suitable viscosity for forming the coating film and the removal of the crosslinking agent remaining after the crosslinking reaction attained thereby, and butanetriol or a mixture of glycerin and butanetriol is particularly suitable as the crosslinking agent in the process for forming a coating film according to the invention.

The process for forming a coating film using the coating composition of the invention will be described with reference to the steps respectively.

### (Coating Step)

The coating step in the invention is a step of coating the coating composition immediately before coating thus obtained through the operations until the mixing step on a target material. The method of coating is not particularly limited and may be effected by various operations including a method of simply dropping droplets of the coating composition, a method of spreading the dropped coating composition with a squeegee, and the ordinary coating methods. Examples of the ordinary coating methods include the spin coating method, the wire bar coating method, the cast coating method, the roll coating method, the brush coating method, the dip coating method, the spray coating method, the curtain coating method, the type printing method, the offset printing method, the gravure printing method, the screen printing method and the inkjet printing method.

The coating method may be appropriately selected, and the viscosity of the coating composition may be adjusted by adding the viscosity adjusting agent to provide such a viscosity that is suitable for the coating method thus selected.

### (Curing Step)

The curing step of the invention is a step of curing the coating composition thus coated in the aforementioned coating step. The operation of the curing step may be heating. Specifically, the heating operation may be carried out by using various kinds of heaters and the like. For example, in the case of the combination of carbon nanotubes each having a functional group -COOR (wherein R represents a substituted or unsubstituted hydrocarbon group) and glycerin or butanetriol, curing is carried out by heating (polyesterification through an ester exchange reaction), whereby the group -COOR of the esterified carbon nanotubes carboxylic acid and the polyol R'-OH (wherein R' represents a substituted or unsubstituted hydrocarbon group) undergo an ester exchange reaction. The reaction proceeds pluralistically to crosslink the carbon nanotubes, and finally, the carbon nanotubes are connected to each other to form a coating film having a network structure.

As examples of preferred conditions for the case using the carbon nanotubes each having a functional group -COOR (wherein R represents a substituted or unsubstituted hydrocarbon group), the heating temperature is preferably from 150 to 200°C in order to attain both the crosslinking reaction and the evaporation of the surplus amount of the crosslinking agent, while the heating temperature may be 150°C, which is the crosslinking temperature of glycerin or butanetriol, or higher. This range of temperature is preferred upon forming a coating film of the invention because the temperature range is lower than the melting point or the glass transition point of the ordinary resin substrates and is sufficiently lower than the boiling point of glycerin or butanetriol.

In the case where the coating composition contains no viscosity adjusting agent, or in the case where the coating composition contains a viscosity adjusting agent having a boiling point lower than the crosslinking reaction temperature, it is preferred that the heating operation is carried out at a temperature around the crosslinking reaction temperature for preventing problems due to heating at a higher temperature (such as deterioration of other members, such as melting of the substrate and oxidation of a metal used in the device) .

The heating time in the case using the carbon nanotubes each having a functional group -COOR (wherein R represents a substituted or unsubstituted hydrocarbon group) is preferably from 1 minute to 10 hours, and more preferably from 10 minutes to 1 hour.

### (Production Process of Electric part)

Upon producing the coating film obtained by using the coating composition of the invention as an electric part, the electric part can be formed, for example, in the following manner.

### (Printing Method)

In order to obtain the coating film having an arbitrary shape, the coating composition for an electric part is printed on a substrate with an arbitrary pattern by using the ordinary printing method, such as the type printing method, the offset printing method, the gravure printing method, the screen printing method and the inkj et printing method. Thereafter, the substrate is heated to cure the coating composition, whereby the coating film having an arbitrary shape can be obtained.

### (Patterning Method)

A coating film is formed on the entire surface of a substrate by using the coating composition for an electric part of the invention. Thereafter, the coating film is patterned to a prescribed shape by the ordinary etching method (including the resist process) using a metal and a polymer as a protective film (including a resist). The patterning operation may also be attained by a physical method, such as cutting.

### [Example]

The invention will be described in more detail with reference to the following reference examples.

### (Reference Example 1 and Comparative Example 1)

### (Reference Example 1)

### (a) Production of Conductive Film

### (1) Preparation of Coating Composition for Electric part

### (i) Purification of Single Wall Carbon Nanotubes

Single wall carbon nanotube powder (purity: 40%, produced by Sigma Aldrich, Inc.) is sieved through a mesh (pore diameter: 125 µm) to remove coarse aggregates to obtain a number average diameter of 1.5 nm and a number average length of 2 µm. 30 mg of the sieved carbon nanotube powder is heated in a muffle furnace at 450°C for 15 minutes to remove carbonaceous substance other than carbon nanotubes. 15 mg of the residual powder is immersed in 10 mL of 5N hydrochloric acid, which is obtained by diluting concentrated hydrochloric acid (35% aqueous solution, produced by Kanto Kagaku Co., Ltd.) twofold with pure water, for 4 hours to dissolve a catalyst metal.

The resulting solution is filtered to recover a deposition. The deposition thus recovered is then subjected three times to the aforementioned operation including heating to immersion in hydrochloric acid for purification. The heating condition thereon is gradually intensified from 450°C for 15 minutes, 450°C for 20 minutes, 450°C for 30 minutes to 550°C for 60 minutes.

It is confirmed that the carbon nanotubes thus purified are largely improved in purity as compared to those before purification (raw material). Specifically, the purity thereof is expected to be 90% or more. The mass of the purified carbon nanotubes finally obtained is about 5% (1 to 2 mg) of the amount of the raw material).

15 mg or more of single wall carbon nanotubes with high purity are obtained by repeating the aforementioned purification operation.

### (ii) Addition of Carboxyl Group - Synthesis of Carbon Nanotubes Carboxylic Acid

30 mg of single wall carbon nanotube powder thus purified by the aforementioned operation (purity: 90% or more, number average diameter: 30 nm, number average length: 3 µm, produced by Science Laboratories, Co., Ltd.) is added to 20 mL of concentrated nitric acid (60% by weight aqueous solution, produced by Kanto Kagaku Co., Ltd.) and then refluxed at 120°C for 5 hours to synthesize carbon nanotubes carboxylic acid. After the temperature of the solution is lowered to room temperature, the solution is subjected to centrifugal separation at 5, 000 rpm for 15 minutes to separate a supernatant and a deposition from each other. The deposition thus recovered is dispersed in 10 mL of pure water, and then subjected to centrifugal separation at 5,000 rpm for 15 minutes to separate a supernatant and a deposition from each other, which is designated as one cycle of washing operation. The washing operation is repeated in further 5 cycles, and the deposition is finally recovered.

The deposition thus recovered is measured for infrared absorption spectrum. For comparison, the single wall carbon nanotube powder as a raw material is also measured for infrared absorption spectrum. Upon comparing the spectra, absorption at 1,734 cm⁻¹ peculiar to carboxylic acid is observed in the spectrum of the deposition but is not observed in the spectrum of the single wall carbon nanotube raw material. It is understood from the result that a carboxyl group is introduced into the carbon nanotubes through the reaction with nitric acid. That is, it is confirmed that the deposition is carbon nanotube carboxylic acid. Upon adding the deposition thus recovered in pure water, it is confirmed that the deposition has good dispersing property. The result supports the infrared spectrum indicating that a hydrophilic carboxyl group is introduced into the carbon nanotubes.

### (ii) Esterification

30 mg of the carbon nanotube carboxylic acid prepared in the aforementioned step is added to 25 mL of methanol (produced by Wako Pure Chemical Industries, Ltd.), to which 5 mL of concentrated sulfuric acid (98% by weight, produced by Wako Pure Chemical Industries, Ltd.) is then added, and the mixture is refluxed at 65°C for 6 hours toachievemethyl-esterification. After the temperature of the solution is lowered to room temperature, a deposition is separated by filtration. The deposition is washed with water and then recovered. The deposition thus recovered is measured for infrared absorption spectrum. As a result, absorption at 1, 734 cm⁻¹ and from 1,000 to 1,300 cm⁻¹ peculiar to the ester is observed, and thus it is confirmed that the carbon nanotube carboxylic acid is esterified.

### (iv) Mixing Step

30 mg of the methyl-esterified carbon nanotube carboxylic acid obtained in the aforementioned step is added to 10 mL of glycerin (produced by Kanto Kagaku Co., Ltd.) and mixed by using an ultrasonic dispersing machine, so as to prepare a coating composition for an electric part of Example 1.

The coating composition for an electric part of Example 1 contains no viscosity adjusting agent but is provided with a suitable viscosity by using the carbon nanotubes in a suitable addition amount.

### (2) Production of Coating film

The coating composition for an electric part of Example 1 is coated on a polyethylene terephthalate plate (dimension: 40 mm x 40 mm, thickness: 0.15 mm) as a target material, and cured by heating to 160°C for 20 minutes, so as to form a coating film.

### (3) Evaluation Test

The coating film thus obtained by using the coating composition of Example 1 is subjected to a scratch test (JIS K5600-5-5, scratch test (loaded needle test), load: 50 g). As a result, no change is visually observed, and electroconductivity is not lost.

The coating film is then subjected to a bending test (JIS K5600-5-1, flexibility (cylindrical mandrel method)) in several tens times, but suffers no significant deterioration.

### (Comparative Example 1)

The same methyl-esterified carbon nanotube carboxylic acid is prepared in the same manner as in Reference Example 1 until the section "(iii) Esterification" in "(1) Preparation of Coating Composition for Electric part". 2 mg of the carbon methyl-esterified nanotube carboxylic acid is added to 1 mL of ethylene glycol (produced by Wako Pure Chemical Industries, Ltd.), and the mixture is dispersed by using an ultrasonic dispersing machine, so as to prepare a coating composition of Comparative Example 1.

The resulting coating composition of Comparative Example 1 is coated on a polyethylene terephthalate plate and cured in the same manner as in Reference Example 1, so as to form a coating film.

The coating film obtained by using the coating composition of Comparative Example 1 is subjected to the same evaluation test as in Example 1. In the scratch test, the coating film is broken immediately after starting the test. In the bending test, the coating film is broken and dropped off upon warping the substrate for applying the test.

It is understood from the result that the coating film obtained by using the coating composition of Comparative Example 1 does not have such film property that is applicable to an electric part.

### (Reference Example 2 - Formation of Transporting Layer for Transistor)

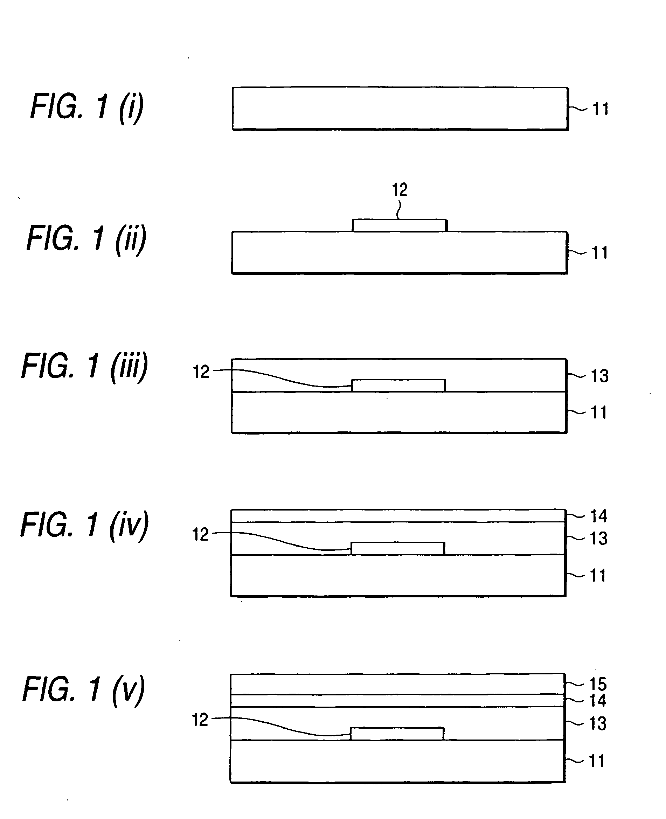

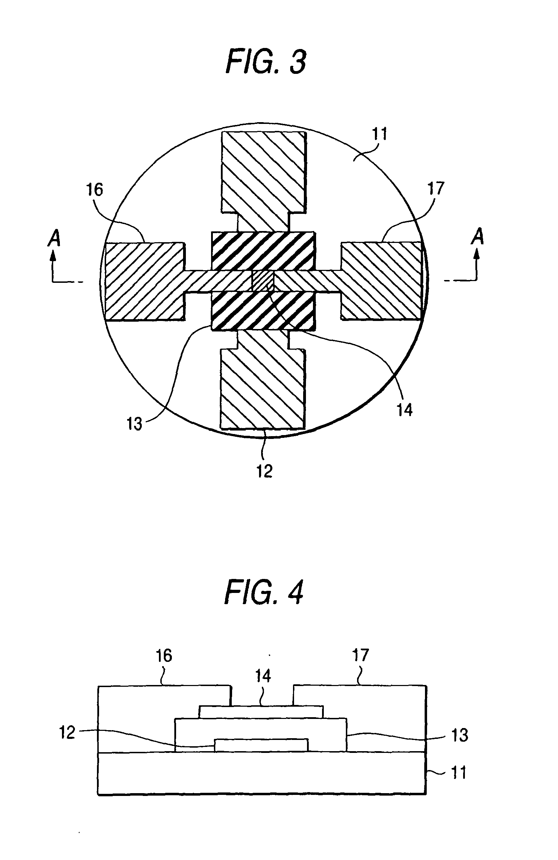

AMOS type field effect transistor (MOS-FET) having the structure shown in Figs. 3 and 4 is produced by the production process shown in Figs. 1-i to 1-v and 2-vi to 2-ix.

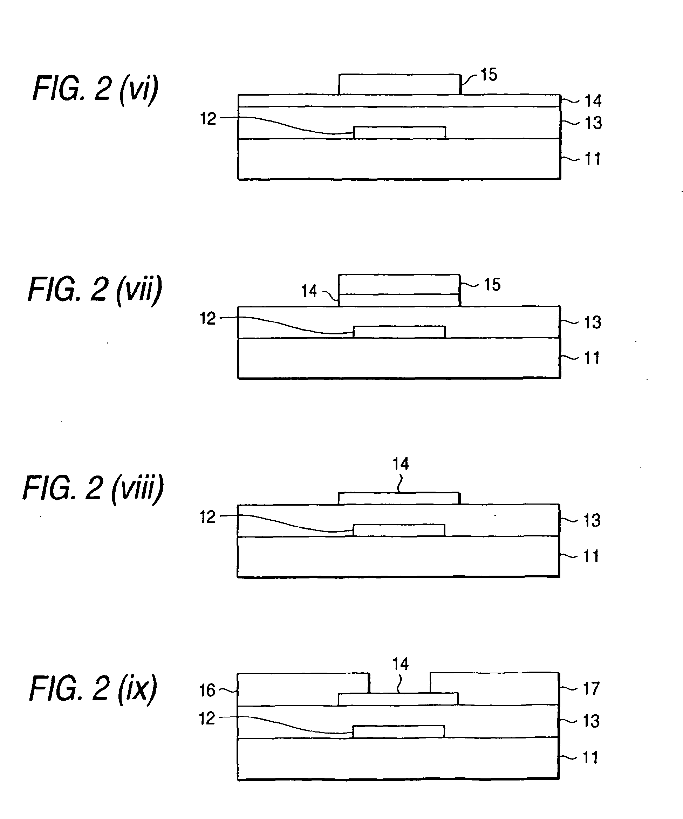

Figs. 1-i to 1-v and 2-vi to 2-ix are enlarged cross sectional views of a substrate in the process for producing the field effect transistor in Reference Example 2, in which Figs. 1-i to 1-v show the first half of the process, and Figs. 2-vi to 2-ix show the last half of the process.

Fig. 3 is an enlarged plane view of the field effect transistor produced in Reference Example 2, and Fig. 4 is a cross sectional view on line A-A in Fig. 3.

The operations in Reference Example 2 will be described with reference mainly to Figs. 1-i to 1-v and 2-vi to 2-ix.

### (1) Formation of Coating film

A silicon wafer 11 as a substrate produced by Advantech Co., Ltd., diameter: 76.2 mm (3 inch), thickness: 380 µm, thickness of surface oxide film: 1 µm) is prepared (Fig. 1-i). A titanium thin film as a gate electrode 12 is vapor-deposited on one surface (upper surface) of the substrate (Fig. 1-ii). Hafnium oxide (HfO₂) as an insulating film 13 is further vapor-deposited thereon (Fig. 1-iii).

In order to improve the adhesion property between the silicon wafer and the coating composition for an electric part to be coated thereon, the silicon wafer is subjected to a surface treatment with aminopropyltriethoxysilane. The surface treatment with aminopropyltriethoxysilane is carried out by exposing the silicon wafer to vapor of 50 µL of aminopropyltriethoxysilane (produced by Sigma Aldrich Corp.) for 3 hours in a sealed dish.

The coating composition for an electric part produced in Reference Example 1 (2 mL) is then coated on the surface of the silicon wafer having been subjected to the surface treatment by the spin coating method using a spin coater (1H-DX2, produced by Mikasa Co., Ltd.). The conditions for the spin coater are 2,000 rpm for 10 seconds.

The silicon wafer having the coating composition for an electric part coated thereon is heated at 160°C for 10 minutes to cure the coating composition, whereby a carbon nanotube coating film 14 having a thickness of 100 nm is produced (Fig. 1-iv). Upon curing by heating, the surplus amount of glycerin is evaporated, and thus the carbon nanotube coating film 14 contains no additive remaining therein.

### (2) Patterning Step

A resist agent (NPR9710, produced by Nagase & Co., Ltd., viscosity: 50 mPa·s) is coated on the surface of the silicon wafer, on which the carbon nanotube coating film 14 is formed, by using a spin coater (1H-DX2, produced by Mikasa Co., Ltd.) at 2,000 rpm for 20 seconds. The silicon wafer is heated at 100°C for 2 minutes over a hot-plate to form a resist layer 15 (Fig. 1-v).

The resist agent used (NRP9710) has the following composition.

| | |
|---|---|
| Propylene glycol monomethyl ether acetate | 50 to 80% by weight |
| Novolak resin | 20 to 50% by weight |
| Photosensitive agent | 10% by weight or less |

The surface of the silicon wafer 11, on which the carbon nanotube coating film 14 and the resist layer 15 are formed, is exposed to a shape corresponding to a transporting layer of the MOS-FET shown in Figs. 3 and 4 (the part referred to as a carbon nanotube coating film 14) by using a mask aligner (a mercury lamp, produced by Mikasa Co., Ltd., MA-20, wavelength: 436 nm) at a light amount of 12.7 mW/cm² for 8 seconds.

The silicon wafer thus exposed is heated to 110°C for 1 minute over a hot-plate, and after allowing to stand for cooling, the resist layer is developed by using NMD-3 (tetramethylammonium hydroxide, produced by Tokyo Ohka Kogyo Co., Ltd., concentration: 2.38% by weight) in a developing machine (AD-1200, produced by Takigawa Sangyo Co., Ltd.). It is confirmedbyobservationwithanoptical microscope that the resist layer 15 is formed into a shape (prescribed pattern) corresponding to the transporting layer shown in Figs. 3 and 4 (Fig. 2-vi).

The silicon wafer having the resist layer 15 formed to have the prescribed pattern is heated to 100°C in a mixed gas (oxygen: 10 mL/min, nitrogen: 40 mL/min) and irradiated with an ultraviolet ray (wavelength: 172 nm) for 2 hours to generate oxygen radicals in an UV asher (excimer vacuum ultraviolet ray lamp, EXM-2100BM, produced by Atom Giken Co., Ltd., wavelength: 172 nm), so as to remove the part of the carbon nanotube coating film 14 that is not protected by the resist layer 15. As a result, the carbon nanotube coating film 14 covered with the resist layer 15 is formed in the shape of the transporting layer (Fig. 2-vii).

The resist layer 15 remaining on the carbon nanotube coating film 14 is removed by washing with acetone, so as to obtain the carbon nanotube coating film 14 formed in the prescribed pattern (Fig. 2-viii).

A source electrode 16 and a drain electrode 17 are formed on the carbon nanotube coating film (transporting layer) 14 by depositing gold to a thickness of 0.15 µm (Fig. 2-ix) to obtain a MOS-FET having the structure shown in Figs. 3 and 4.

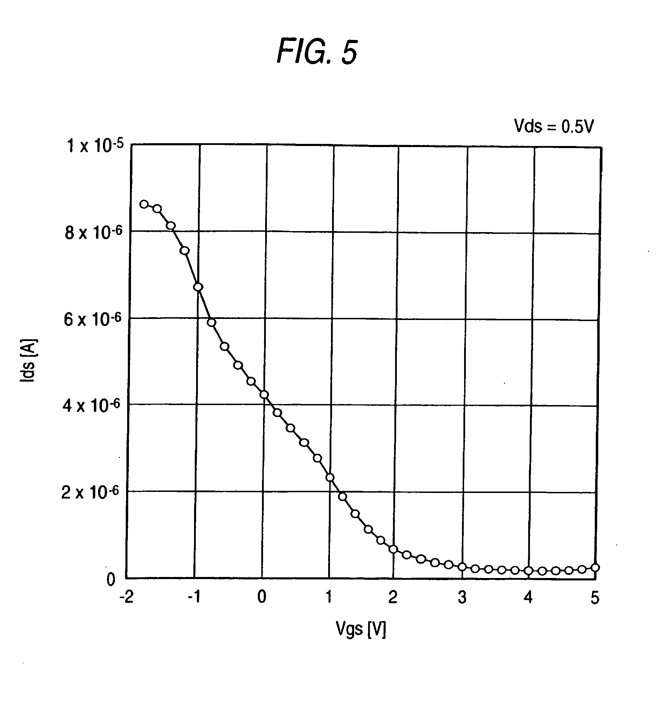

The field effect transistor thus obtained is measured for the current-voltage characteristics with direct current between the source electrode 16 and the drain electrode 17 with respect to the voltage (gate voltage) Vgs of the gate electrode 12 by using a semiconductor parameter analyzer 4156B (produced by Anton Technology Co., Ltd.). The results obtained are shown in Fig. 5. It is understood from Fig. 5 that the conductivity between the drain electrode 16 and the source electrode 17 is changed with respect to the gate voltage, and thus it is confirmed that the carbon nanotube coating film 14 functions as a transporting layer.

Accordingly, it is confirmed that the coating film formed by using the coating composition of the invention (the coating composition of Reference Example 1) is not broken even upon subjecting to the etching process, and functions as a transporting layer of a field effect transistor.

## Claims

1. A coating composition for an electric part, comprising:
carbon nanotubes each having a functional group; and
a crosslinking agent crosslinking the functional groups through a crosslinking reaction associated with heating, the crosslinking agent comprising butanetriol or a mixture of glycerin and butanetriol.

2. The coating composition for an electric part according to claim 1, wherein a liquid component of the coating composition is only the crosslinking agent.

3. The coating composition for an electric part according to claim 1, further comprising a viscosity adjusting agent, wherein the viscosity adjusting agent comprises a monohydric alcohol having a boiling point equal to or lower than a temperature of the crosslinking reaction.

4. The coating composition for an electric part according to claim 3, wherein the viscosity adjusting agent has a boiling point of 200°C or less.

5. The coating composition for an electric part as claimed in claim 3, wherein the viscosity adjusting agent is at least one of methanol and ethanol.

6. A method for forming a coating film, comprising:
coating a coating composition for an electric part on a target material, the coating composition including carbon nanotubes and a crosslinking agent; and
heating the coating composition to form a crosslinked film of the carbon nanotubes on the target material,
wherein the carbon nanotubes each has a functional group, the crosslinking agent crosslinks the functional groups through a crosslinking reaction associated with heating, the crosslinking agent comprises butanetriol or a mixture of glycerin and butanetriol.

## Patentansprüche

1. Beschichtungszusammensetzung für eine elektrische Komponente, umfassend:
Kohlenstoffnanoröhren von denen jede eine funktionelle Gruppe besitzt; und
ein Vernetzungsmittel, das die funktionellen Gruppen durch eine Vernetzungsreaktion verbunden mit Erwärmen vernetzt, wobei das Vernetzungsmittel Butantriol oder ein Gemisch aus Glycerin und Butantriol umfasst.

2. Beschichtungszusammensetzung für eine elektrische Komponente nach Anspruch 1, wobei eine flüssige Komponente von der Beschichtungszusammensetzung nur das Vernetzungsmittel ist.

3. Beschichtungszusammensetzung für eine elektrische Komponente nach Anspruch 1, weiter umfassend ein viskositätseinstellendes Mittel, wobei das viskositätseinstellende Mittel einen einwertigen Alkohol mit einem Siedepunkt gleich oder niedriger als eine Temperatur der Vernetzungsreaktion umfasst.

4. Beschichtungszusammensetzung für eine elektrische Komponente nach Anspruch 3, wobei das viskositätseinstellende Mittel einen Siedepunkt von 200 °C oder weniger besitzt.

5. Beschichtungszusammensetzung für eine elektrische Komponente nach Anspruch 3, wobei das viskositätseinstellende Mittel mindestens eines von Methanol und Ethanol ist.

6. Verfahren zum Bilden eines Beschichtungsfilms, umfassend:
Auftragen einer Beschichtungszusammensetzung für eine elektrische Komponente auf ein Zielmaterial, die Beschichtungszusammensetzung enthält Kohlenstoffnanoröhren und ein Vernetzungsmittel; und
Erwärmen der Beschichtungszusammensetzung, um einen vernetzten Film von den Kohlenstoffnanoröhren auf dem Zielmaterial zu bilden,
wobei jede der Kohlenstoffnanoröhren eine funktionelle Gruppe besitzt, das Vernetzungsmittel die funktionellen Gruppen durch eine Vernetzungsreaktion verbunden mit Erwärmen vernetzt, das Vernetzungsmittel Butantriol oder ein Gemisch aus Glycerin und Butantriol umfasst.

## Revendications

1. Composition de revêtement pour composant électrique, comprenant :
des nanotubes de carbone ayant chacun un groupe fonctionnel ; et
un agent de réticulation réticulant les groupes fonctionnels par le biais d'une réaction de réticulation associée au chauffage, l'agent de réticulation comprenant du butanetriol ou un mélange de glycérine et de butanetriol.

2. Composition de revêtement pour composant électrique selon la revendication 1, dans laquelle un composant liquide de la composition de revêtement est uniquement l'agent de réticulation.

3. Composition de revêtement pour composant électrique selon la revendication 1, comprenant en outre un agent d'ajustement de viscosité, l'agent d'ajustement de viscosité comprenant un alcool monohydrique ayant un point d'ébullition inférieur ou égal à une température de la réaction de réticulation.

4. Composition de revêtement pour composant électrique selon la revendication 3, dans laquelle l'agent d'ajustement de viscosité a un point d'ébullition de 200 °C ou moins.

5. Composition de revêtement pour composant électrique selon la revendication 3, dans laquelle l'agent d'ajustement de viscosité est du méthanol et/ou de l'éthanol.

6. Procédé de formation d'un film de revêtement, comprenant :
l'étalement d'une composition de revêtement pour composant électrique sur un matériau cible, la composition de revêtement comprenant des nanotubes de carbone et un agent de réticulation ; et
le chauffage de la composition de revêtement pour former un film réticulé des nanotubes de carbone sur le matériau cible,
dans lequel les nanotubes de carbone ont chacun un groupe fonctionnel, l'agent de réticulation réticule les groupes fonctionnels par le biais d'une réaction de réticulation associée au chauffage, l'agent de réticulation comprenant du butanetriol ou un mélange de glycérine et de butanetriol.
